Europäisches Patentamt

European Patent Office

Office européen des brevets

(19)

(11) Publication number:

**0 154 968**
A2

(12) **EUROPEAN PATENT APPLICATION**

(21) Application number: **85102762.3**

(22) Date of filing: **11.03.85**

(51) Int. Cl.⁴: **G 01 V 1/38**

(30) Priority: **12.03.84 US 588625**

(43) Date of publication of application: **18.09.85**
**Bulletin 85/38**

(84) Designated Contracting States: **FR GB NL**

(71) Applicant: **ATLANTIC RICHFIELD COMPANY, Arco Plaza 515 S. Flower Street, Los Angeles California 90071 (US)**

(72) Inventor: **Fricke, Robert J., 3500 Bellwood Circle, Plano Texas (US)**

(74) Representative: **Baillie, Iain Cameron et al, c/o Ladas & Parry Isartorplatz 5, D-8000 München 2 (DE)**

(54) Marine seismic prospecting method and system.

(57) Multiple marine robot vehicles adapted to tow seismic streamer cables are advanced along parallel paths under remote control from a mother seismic exploration vessel so as to develop a pattern of marine seismic profiles in either 2-D or 3-D density. Command and control may be provided by acoustic links to enable deeply submerged or under-ice operation of such robots.

## MARINE SEISMIC PROSPECTING METHOD AND SYSTEM

This invention relates generally to the field of marine seismic prospecting and more particularly to the acquisition of marine seismic data utilizing hydrophone arrays towed in the water along predetermined courses so as to generate seimic profiles.

Marine seismic operations are commonly conducted by towing through the water a long streamer cable on which are mounted at spaced intervals arrays of marine pressure geophones (commonly termed hydrophones). The streamer is made neutrally buoyant at a depth typically between ten and twenty meters below the surface of the water, and the length of the streamer may be in the thousands of meters. An energy source or an array of such sources may be carried by the towing vessel in order to generate the necessary seismic reflections which are detected by the hydrophones. The data so gathered is recorded and processed to generate a seismic profile.

This method of gathering information is subject to limitations which do not exist for land data acquisition. At present, only one such steamer cable is customarily towed behind a ship. An attempt to tow multiple streamers behind the same ship in an effort to gain more information on a single seismic run risks entanglement problems and is thus impractical. A further disadvantage of the marine streamer method as presently practiced is that it cannot be employed to produce a so called "split spread" wherein the shot point is at or perpendicularly offset from the center of the hydrophones

CASE: 06-0734A

deployed in the water along a single path. The reason is that one cannot "push" a streamer cable ahead of a seismic vessel carrying a seismic source. If simultaneous multiple lines could be shot in marine operations with a single vessel the cost of acquisition would be decreased by a factor equal to the number of cables employed. If a split spread method could be practiced in this environment a solution would be found to the age old problem in marine work of whether to shoot "up dip" or "down dip", because split spread shooting occurs in both directions at once for 100% coverage.

A still further limitation on marine seismic operations of the type described is the difficulty of acquiring three dimensional or "3-D" seismic data. Shooting a linear seismic cross-section or a series of isolated linear seismic sections has limited usefulness. Three dimensional information is essential in order to provide knowledge of the component of dip at right angles to the main profile line. In fact it has been stated that seismic data that yields some kind of 3-D information is the best hope for solving what is probably the most severe problem in seismic exploration, to wit, the mapping of faults.

3-D data acquisition amounts to using a two dimensional or "areal aperture" recording technique. All such techniques take advantage of the fact that subsurface data is obtained from the midpoints between source and receivers and arranging shots and hydrophones so that the midpoints are not in the usual straight line but spread out over an area. One marine method which attempts to acquire 3-D data of sufficient density involves utilizing the so-called "feathering" of a seismic streamer cable, i.e., the known lateral offset of the cable from leading to trailing end caused by sea currents transverse to the directions of travel. With a cable so deployed, the data midpoint between a source carried on the ship and a hydrophone closer to the ship will be offset to the side from the corresponding data midpoint for a hydrophone farther from the ship. In another words, a "swath" of midpoint lines is produced rather than a single line, but only at the sacrifice of the quantity of data taken along any one midpoint line.

It is also possible to approximate 3-D marine seismic recording by circling the seismic ship at the end of each run, reversing direction at a considerable distance from the original run and then successively repeating these runs, offset each time by a small lateral distance so as to eventually cover the desired surface area. But this method is very time consuming, expensive and error prone.

It is therefore a general object of this invention to devise an improved method and system for acquisition of marine seismic reflection data with enhanced operating efficiency and data acquisition capability.

The method to be described hereafter takes advantage of well known technology in the field of remotely controlled devices. Unmanned, remotely controlled work vehicles have already been developed, particularly for oceanographic applications. For example the Office of Naval Research as early as 1968 developed and successfully tested a tethered sea floor vehicle known as RUM (Remote Underwater Manipulator) involving complex telemetry for control. Deep submersible unmanned vehicles are also known which are acoustically controlled responsive to commands from the computerized equipment of a surface ship and to self-commands programmed into the vehicle's control system prior to launching. Submarines may be controlled by a mother ship until within a prescribed operating area at which time an internal autocontrol maintains the submarine within the area. The possibility of using unmanned submersible vehicles in seismic profiling was advanced a number of years ago. For example, an article entitled "Sea Drone 1 and the Unmanned System" in Marine Technology, 1970, copyright 1970, Marine Technology Society on page 841 describes an unmanned submersible operating at a velocity of five knots "while profiling with a streaming hydrophone attached to the after end of the vehicle". Despite the existence of these technological tools, what has apparently escaped the art is the adaptability of remotely controlled vehicles of the type described to the solution of the problems in marine seismic exploration detailed above.

It is therefore a more particular object of this invention to devise an improved method of marine seismic exploration utilizing remotely controlled vessels.

Other objects and advantages of this invention will become apparent from a consideration of the detailed description and illustrations to follow taken in conjunction with the appended Claims.

Summary of the Invention

Briefly, a method and system of marine seismic exploration in accordance with this invention utilizes one or more robot vessels powered and guided remotely from a seismic "mother ship" or from a series of fixed locations, each such robot vessel trailing a seismic streamer cable. By remote control, either through radio or acoustic link, the robot vessels are caused to travel simultaneously along paths in a predetermined relation to each other or to that of the mother ship so as to produce a pattern of multiple seismic profiles of desired density and direction.

In one version of this method a robot vessel may be commanded to travel directly ahead of or behind another robot or a mother vessel and along the same path. With a seismic source located so as to occupy the center of the combined hydrophone spread produced by the two associated streamer cables, a split spread method may be practiced. With a seismic source carried by the lead vehicle, long offsets can be achieved for recording seismic refractive data.

The source of the remote control for these operations may be the mother ship itself or be one or more fixed shore or marine locations. The seismic data detected and gathered by the robot vessels may be telemetered directly to the mother ship or stored on the robot vessel for later transmission.

Brief Description of the Drawings

FIGURE 1 illustrates diagrammatically a mother seismic ship and a remotely controlled robot tow vessel, both vessels trailing seismic streamers for generating multiple seismic profile lines in accordance with this invention.

FIGURE 2 illustrates diagrammatically a mother seismic ship and a plurality of robot tow vessels as in FIGURE 1 deployed on either side of the mother vessel for areal 3-D data recording.

FIGURE 3 illustrates diagrammatically a mother seismic vessel together with a remotely controlled robot tow vessel such as in FIGURE 1 deployed ahead of the mother vessel along the same path of travel for practicing a split hydrophone spread method in accordance with an alternate embodiment of this invention.

FIGURE 4 illustrates diagrammatically yet another embodiment of this invention illustrating the deployment of a mother seismic vessel together with a plurality of robot vessels in a combined multiple profile and split spread method of exploration.

FIGURE 5 illustrates diagrammatically a still further embodiment of this invention involving a mother seismic vessel trailed along the same path by a robot tow vessel in a "long offset" configuration.

FIGURE 6 illustrates diagrammatically a further embodiment of the method of this invention wherein multiple seismic profiles are generated with use of a mother seismic vessel at the surface acoustically linked to a plurality of deeply submerged robot vessels towing

-6-

streamers along parallel paths.

FIGURE 7 illustrates diagrammatically a plurality of under-ice streamer-carrying robot vessels controlled from spaced apart command stations at fixed intervals on the ice.

FIGURE 8 illustrates a further under-ice deployment of plural streamer-carrying robot vessels with command control points spaced apart and positioned along the sea bottom.

FIGURE 9 illustrates diagrammatically a plan view of an ice shelf with an areal implantation of command and control positions for guidance of a plurality of under ice streamer carrying robot vessels.

FIGURE 10 illustrates diagrammatically the deployment of a plurality of streamer-carrying under ice robot vessels moving in parallel paths under the command and control of a mother seismic ship following an ice breaker.

Detailed Description of the Preferred Embodiments

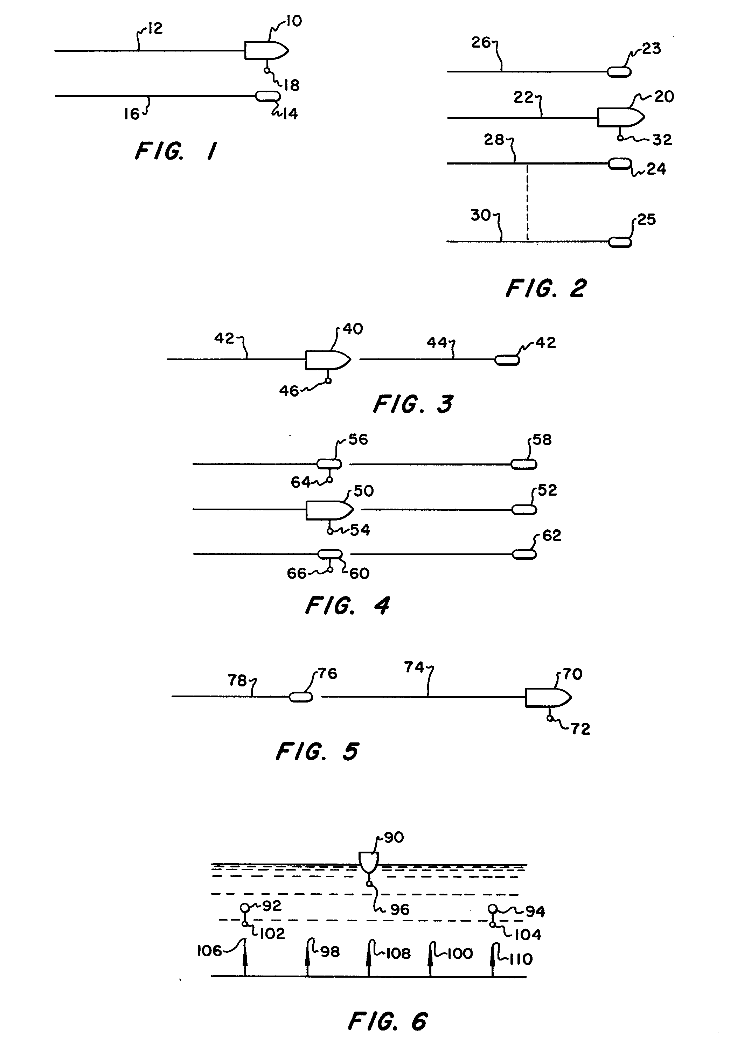

Referring now to FIGURE 1 there is shown diagrammatically a surface seismic exploration vessel 10 towing a seismic streamer cable 12 and an unmanned robot vessel 14 towing a similar seismic streamer cable 16 along a parallel path at a preselected distance. Cables 12 and 16 are of any desired length, for example, 3600 meters. Streamers 12 and 16 may typically carry spaced-apart live hydrophone sections each containing multiple hydrophones in series. By means of a suitable radio link (not shown) mother vessel 10 may give appropriate commands to robot vessel 14, causing it to move along a path parallel to that of mother vessel 10 and at any desired interval, say, for example, 50 to 200 meters. Seismic reflections generated in response to the excitation of source 18 carried by mother vessel 10 will be detected by the hydrophones of streamers 12 and 16 and by means well known in the art the data so detected may be gathered and recorded. In this way multiple seismic profiles may be generated along the paths defined by the respective streamer cables 12 and 16.

As a feature of this invention, the data gathered by streamer 16 may be telemetered back to mother vessel 10 or to a shore location in real time via the established radio link. Alternatively such data may be stored on vessel 14 on tape or on an optical disc or other high density medium.

It is important to insure at all times that the data collected by vessel 14 is of acceptable quality. Direct transmission of such data back to mother ship 10 via radio link is limited in quantity by the data rate of such link. By storing all of the data onboard vessel 14 for later transmission, one can simultaneously have quality control data telemetered to the mother ship 10. In this manner the number of channels collected is no longer limited to the data rate of the radio link. Furthermore the allowable range between mother ship 10 and robot 14 is increased since lower data rate links are less sensitive to range problems.

In order to accurately position robot 14, one technique is to have vessel 14 use the same radio navigation network used by vessel 10. Another alternative is to set up a navigation network that is relative to the mother ship 10. If the offset of the vessel 14 is always relatively small a local network may be set up using mother ship 10 as a reference. In any of the cases described, positioning control may reside on either mother ship 10 or robot 14. If for example such control were on vessel 14, mother ship 10 could command it to go to a certain coordinate position and robot 14 would then respond under its own control. If conversely, mother ship 10 were in control, navigation ranges might be sent from robot 14 to mother ship 10 and active position controls signal sent back to robot 14. The first of these two variable control situations will be preferable to minimize command and control usage of the radio link.

-8-

The latter would be preferable to insure direct control over robot 14. A combination of the two methods is also favorable.

An extension of the method of FIGURE 1 is illustrated in FIGURE 2 wherein a single mother ship 20 carrying seismic streamer cable 22 is adapted to control a plurality of robot tow vessels such as vessels 23, 24 and 25 which are respectively towing similar streamer cables 26, 28 and 30 along multiple parallel paths. A seismic source or array of sources 32 carried by mother vessel 20 produces the reflections detected by streamer cables 22, 26, 28 and 30 respectively of mother vessel 20 and robots 23, 24 and 25 to yield seismic profiles spread over any desired area for 3-D data acquisition of given density.

A variation of this technique (not shown) would involve carrying alternate or additional seismic sources on any or all of robots 23, 24 and 25 to increase the density of the multiple profiles.

To practice a split spread geophysical method with the aid of this invention, as best seen in FIGURE 3, one can position a mother seismic vessel 40 and its trailing streamer 42 directly behind and in the path of a robot 42, which tows streamer 44. A source 46 carried by the mother vessel 40 will produce the desired split spread and thus give good data coverage whether the direction of travel is "up dip" or "down dip". Clearly it would be possible to reverse the relative positions of mother vessel 40 and robot 42 (not shown) in which case the seismic source would of course be carried on the robot 42 rather than the mother vessel 40.

A combination of the areal aperture 3-D technique shown in FIGURE 2 and the split spread method shown in FIGURE 3 is more particularly illustrated in FIGURE 4. In this arrangement a single mother vessel 50 may be carried in a split spread arrangement with a robot 52 whose path is coincident with and ahead of that of mother vessel 50, the necessary exciting source 54 being carried by mother vessel 50. Offset to one side of the path of mother vessel 50, robot vessel 56 and 58 may be adapted to proceed along coincident paths in split spread while offset to the other side, robot vessels 60 and 62 may be similarly aligned. To complete the practice of this method, robot 56 will carry a seismic source 64 and robot 60 a source 66.

In some instances it may be desirable to detect seismic refractions at a great distance, termed "long offset". For example, in FIGURE 5 a mother vessel 70 carrying a source 72 and a streamer cable 74 may be trailed by a remotely controlled robot 76 carrying a long streamer 78 for a total detector length which typically approximates 10,000 meters.

One of the desirable features of the method of this invention is that multiple robots and associated seismic streamer cables may be deployed in a deeply submerged mode. In FIGURE 6 for example a mother ship 90 may command the operation of streamer-carrying robots 92 and 94 moving along parallel paths in response to acoustically transmitted signals. With a source 96 carried on mother vessel 90 seismic profiles are generated along paths on midpoints 98 and 100. Additional sources 102 and 104 carried by robots 92 and 94 will generate further seismic profiles along paths on midpoints 106, 108 and 110. Sources 102 and 104 may, of course, be operated without the use of source 96.

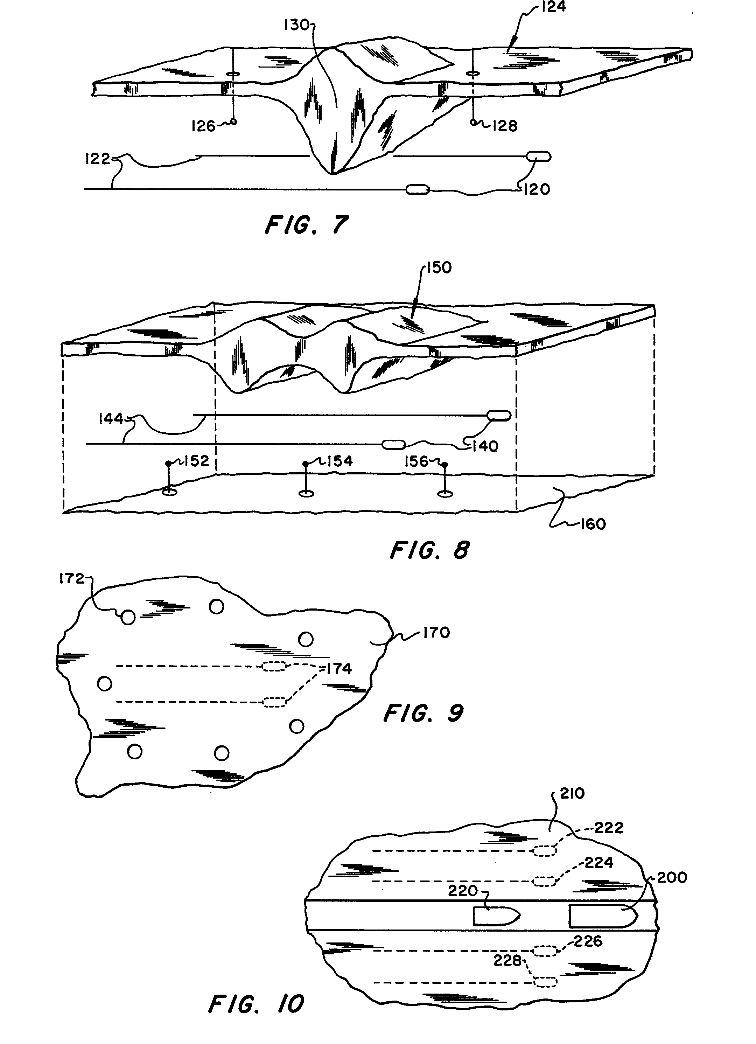

A feature of this invention is its adaptability to under ice seismic prospecting. If for example, as in FIGURE 7 a plurality of streamer carrying robots 120 carrying trailing streamers 122 are deployed beneath ice shelf 124, commands can be delivered to robots 120 acoustically from fixed control stations at spaced apart intervals such as stations 126 and 128. In this fashion one can overcome the possible interference with the path of acoustic signals resulting from a downwardly extending

-10-

ice keel 130 in the ice shelf 124. Any two such stations of course will enable robots 120 to acoustically triangulate their respective positions. In somewhat similar fashion, a plurality of robots 140 with trailing streamers 144 deployed beneath ice shelf 150 as shown in FIGURE 8 may be commanded by means of stations such as 152, 154 and 156 fixed to the sea bottom 160.

For maximum areal coverage beneath an ice shelf 170 as shown in FIGURE 9 one may position a plurality of command stations 172 so as to surround the entire perimeter of shelf 170 and furnish acoustic links to one or more under ice robot streamer-trailing seismic vessels 174. A still further alternative version of under ice practice of the method of this invention as illustrated in FIGURE 10 involves utilizing an ice breaker 200 adapted to break a path through ice shelf 210 through which mother seismic vessel 220 may travel so as to remotely control the under ice operation of robots 222, 224, 226 and 228. Alternately ice breaker 200 may itself be readily modified to function as a seismic vessel.

In all of the above described modes in which the method of this invention is carried out there is a great saving in personnel and expensive equipment. Furthermore the method makes the acquisition of 3-D seismic data much easier and much more reliable. A still further advantage is the greatly improved signal to noise ratio on the seismic records, particularly with the use of fully submerged robots which do not require streamer lead-in sections attached to on-deck cable reels.

Within the scope of this invention, it is understood that those skilled in the art will readily employ many variations in remote control techniques, in the types of seismic sources, and in the method of deployment of such sources, the details as set forth herein being illustrative only.

C L A I M S

1.      A method of marine geophysical prospecting wherein seismic signals are generated and reflected from the marine subsurface characterized by

remotely controlling the operation of a plurality of marine robot vehicles so that they are advanced simultaneously along a like plurality of paths in predetermined relation, each said vehicle being provided with means for detecting and gathering data resulting from the reflection of said seismic signals along a respective one of said paths; and

recording said data so as to develop multiple seismic profiles.

2.      A method of marine seismic geophysical prospecting characterized by

operating a command marine seismic exploration vessel along a first predetermined path;

remotely controlling the position of a robot vessel from said command vessel so that said robot vessel is advanced along a second path parallel to and at a predetermined distance from said first path;

generating seismic signals from a source carried by said command vessel;

towing seismic detector arrays behind said command and robot vessels respectively for detecting the reflections of said seismic signals; and

causing the data gathered from said detector arrays to be transmitted to said command vessel.

3.      A method according to claim 1, characterized by transmitting the data gathered by at least one of said remotely controlled vehicles to a preselected location for storage.

4.      The method of claim 1, including the further step of storing on at least one of said remotely controlled vehicles the data gathered thereby.

CASE: 06-0734A

5.       A method according to claim 1, characterized by the fact that the vehicles are remotely controlled from a plurality of fixed locations.

6.       A marine seismic prospecting system characterized by
         a command seismic prospecting vessel;
         means operable from said command vessel for producing seismic signals;
         a robot vessel;
         a seismic streamer cable towed by said robot vessel for detecting the reflections of said seismic signals from the marine subsurface;
         means operable from said command vessel for remotely controlling the position of said robot vessel such that said command and robot vessels advance along substantially parallel paths at a predetermined separation; and
         further means operable from said command vessel for remotely controlling the storage of the data collected by said robot vessel.

7.       A marine seismic prospecting system characterized by
         a command seismic prospecting vessel;
         means carried by said command vessel for producing seismic signals;
         a robot vessel;
         seismic streamer cable carried respectively by said command and robot vessels for detecting the reflections of said seismic signals from the marine subsurface;
         means operable from said command vessel for remotely controlling the position of said robot vessel such that said vessel advances along the same path as said command vessel; and
         further means operable from said command vessel for remotely controlling the storage of the data collected by said robot vessel.

8.       A system according to claim 6, characterized by the fact that the means for producing seismic signals is a seismic energy source carried by the robot vessel.

9.       A system according to claim 7, characterized by

0154968

-3-

the fact that the robot vessel travels ahead of the command
vessel to thereby enable split spread data acquisition.

10.      A system according to claim 7, characterized by
the fact that the robot vessel travels behind the command
vessel so as to enable the acquisition of long offset
seismic refraction data.

1/2

0154968

FIG. 1

FIG. 2

FIG. 3

FIG. 4

FIG. 5

FIG. 6

0154968

FIG. 7

FIG. 8

FIG. 9

FIG. 10